# EUROPEAN PATENT SPECIFICATION

(11) **EP 3 823 432 B1**
(45) Date of publication and mention of the grant of the patent: **08.11.2023**
(21) Application number: 19749802.5
(22) Date of filing: 19.07.2019
(51) Int. Cl.: A01C 7/12, A01C 19/02, A01C 19/04, A01C 15/00

(54) **ADJUSTABLE DISTRIBUTOR ASSEMBLY FOR GRANULAR MATERIALS AND THE LIKE**
EINSTELLBARE VERTEILERANORDNUNG FÜR KÖRNIGES MATERIAL UND DERGLEICHEN
ENSEMBLE DISTRIBUTEUR RÉGLABLE DESTINÉ À DES MATÉRIAUX GRANULAIRES ET ANALOGUES

(30) Priority: 19.07.2018 IT 201800007355
(43) Date of publication of application: 26.05.2021
(73) Proprietor: Maschio Gaspardo S.p.A., 35011 Campodarsego (PD) (IT)
(72) Inventor: DONADON, Gianfranco, 30023 Concordia Saggitaria (VE) (IT)
(74) Representative: Locas, Davide
(86) International application number: PCT/IB2019/056190
(87) International publication number: WO 2020/016844

(56) References cited:
- EP-A1- 2 260 689
- US-A1- 2010 132 600
- US-A1- 2010 307 395
- US-A1- 2012 227 648
- US-A1- 2015 271 988

## Description

The present invention relates to an adjustable distributor assembly for granular materials and the like.

Adjustable distributors of this kind are widely used on agricultural seeders to distribute metered granular materials such as seeds, fertilisers and/or additives such as disinfectants, insecticides or micro-elements in association with the seed during sowing operations. Such distributors are also known as granulators or micro-granulators, in particular when used for distribution of additives. Beyond this preferred use, they are also used in all sectors where metered distribution of product is required. Preferably, the distribution occurs proportional to the speed of advancement of the machine they are attached to.

The current trend in the seeder sector is that of massively using electric control systems for control and metering of seeds as well as fertiliser and granular materials because said use allows for improved distribution accuracy compared to merely mechanical systems using drag driven transmissions. Drag driven transmissions are indeed based on use of one (or more) drive wheels in rolling contact with the ground and preferably connected without slippage (for example, by means of chain transmissions) with a drive shaft dedicated to operation of a distributor drum. Even though slippage in the kinematic transmission chain is prevented, slippage of the wheels on the ground cannot be completely inhibited and becomes more significant with an increase in the speed of advancement of the machine given like sowing ground conditions. On the contrary, electric operation of the distributors allows for variation, at will, of rotation speed, independently from speed of advancement of the machine. Moreover, electric operation lends itself to control with sensors, allowing for metering of material to be supplied on the basis of actually supplied quantity, detected by sensors, instead of parameters that are theoretically proportional to the same, such as speed of advancement of the machine.

However, electric control systems have a considerable limit impacted by the electric power available on board the machine. Traditionally, said electric power is supplied by the electric system of the agricultural tractor associated with the machine and is therefore limited by the power of the on-board alternator and of the storage battery bank. Standard installation is often insufficient to power all such functions, in particular when sowers having substantial working widths are used. In such a case, alternative systems to generate the necessary electric power are required, using, for example, specific motorised on-board generators for this function. The whole is, however, unwantedly burdensome both for costs involved and for the weights and operational delicacy of such equipment.

EP2353356 describes an adjustable distributor for granular materials with alveolated drum distributor and an electrically-powered shut-off device arranged in an output line. The adjustment of the granulate flow is exclusively obtained by varying the rotation speed of the drum distributor.

US7100522 describes another example of adjustable distributor for granular materials which foresees a meter with radial blading.

Other examples of adjustable distributor for granular materials are disclosed in either US2010/132600 or US2105/271988.

The underlying problem of this invention is to provide an adjustable distributor for granular materials that is structurally and operationally conceived to allow a continuous adjustment of the material supplied without significantly affecting the available on-board electric power of the machine.

Another purpose of this invention is to provide a distributor assembly which minimises the disadvantages associated with a driven transmission.

Said problem is solved and said purposes are achieved by means of an adjustable distributor assembly for granular materials and the like, according to claim 1. The distributor is actuated by means of a drag driven transmission or by means of a hydraulic motor and, and preferably, said shutter is actuated by means of an electric actuator.

Two significant results are thus obtained. Firstly, a drag driven transmission or a hydraulic motor that does not entail any electric consumption is used to roughly adjust the distributor. Secondly, the flow adjustment provided by the shutter is used to partialize the flow to the distributor. This guarantees all the benefits of the previously discussed electric adjustment, in association with the benefits of a mechanical or hydraulic actuation of the distributor components that entail the greatest energy consumption. Moreover, the consumption of electric power at the distributor is minimised because the shutter does not require continuous adjustments, as an initial adjustment and a few variations during use are generally sufficient.

Preferably, the distributor comprises an alveolated drum or with recesses which is rotated about an axis substantially parallel to the sliding axis of said shutter. In this way, the partializing by the shutter not only applies to the clearance of the output opening, but also to the maximum operative length of the recesses on the distributor drum. This makes the obtained adjustment much more accurate and effective.

The advantageous adjustment accuracy is further improved by using recesses extending in an axial direction on the shell of said drum.

The drum can include or consist of a radially bladed rotary valve, the blading of which defining said recesses.

Preferably, the electric actuator of said shutter is of the linear type, such as a worm screw or rack and pinion actuator. These actuators combine accurate adjustment with low electricity consumption. However, the possibility of using other types of actuators, for example electropneumatic or electrohydraulic ones, is not excluded.

The features and advantages of the invention will appear in greater detail in the detailed description below of a preferred but not exclusive embodiment example, shown by way of example but not limited to, with reference to the attached drawings wherein:
- FIG. 1 is a section view of the adjustable distributor assembly according to this invention;
- FIG. 2 is a perspective view of a detail of the adjustable distributor assembly of FIG. 1;

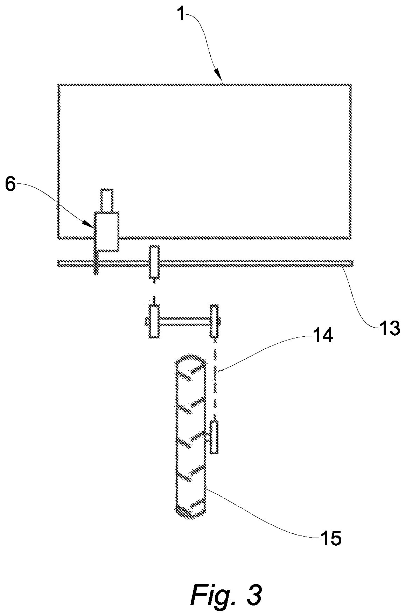

- FIG. 3 is a simplified outline of the adjustable distributor assembly of the preceding figures.

In the figures, 1 indicates, as a whole, an adjustable distributor assembly for granular materials and the like, preferably intended for use on agricultural seeders for the metered distribution of seeds, fertilisers, insecticides and/or micro-elements packaged in coarser or finer granular form.

The distributor assembly 1 comprises a hopper 2 with an output opening 3 and a shutter 4 guided in a sliding manner on hopper 2 along a preferably linear direction indicated with X, for the partializing of the output opening 3.

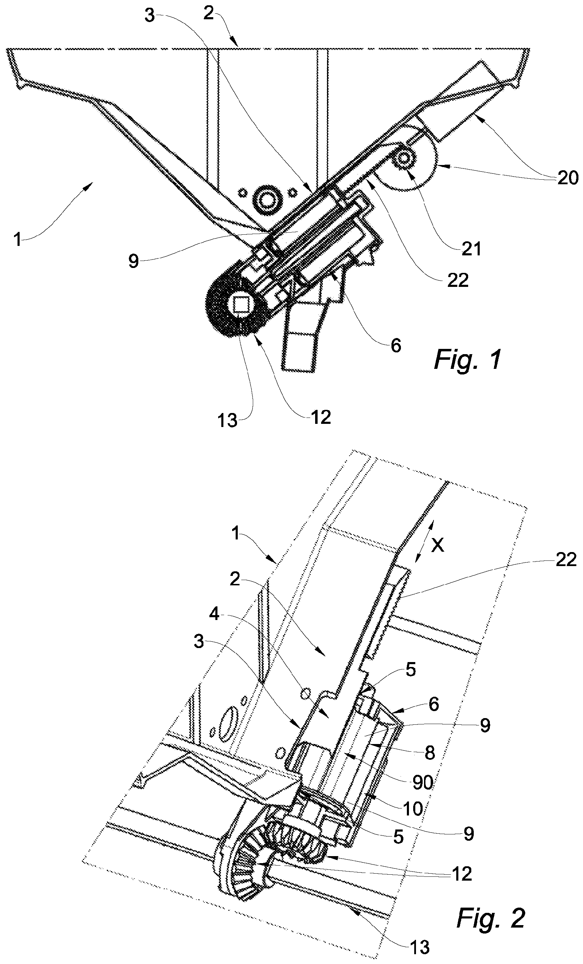

In a preferred embodiment, shutter 4 is guided by means of specific guides 5, which are partially visible in FIG. 2.

Preferably, opening 3 together with the respective shutter 4 are arranged at a lower portion of hopper 2, substantially in proximity of the bottom of the same to allow the almost complete emptying of material present in hopper 2.

A distributor, preferably with rotating alveolated drum, and indicated as a whole with 6, is attached to the hopper 2 at opening 3.

In an embodiment, the distributor 6 is of the volumetric type with cavities. A closed-loop motorised conveyor belt on the respective rollers may also be used, preferably an alveolated belt to deliver in a metered manner granular materials from the hopper via opening 3.

Still in reference to FIG. 1, in a preferred embodiment, distributor 6 comprises a substantially cylindrical drum 8 with axis aligned with the sliding direction X of the shutter 4.

In other words, the drum 8 is rotated about an axis that is substantially parallel to the sliding axis of shutter 4.

For said reason, in this text the axis of the distributor 6 will be indicated with the same reference as the sliding direction X.

Preferably, the drum 8 of the distributor 6 presents a plurality of cavities 9 that have an elongate shape which substantially extends parallel to the X axis. In an alternative embodiment, which is not illustrated, the cavities 9 may extend along a longitudinal direction which is inclined in relation to the X axis, preferably, forming a smaller angle equal to 30°.

In some embodiments, the cavities are distributed at a constant pitch along the drum perimeter, on its shell 10.

According to a preferred embodiment, the cavities 9 form recesses 90 which face opening 3 so that the material exiting opening 3 itself falls in the same by means of gravity.

For this purpose, opening 3 preferably has longitudinal dimensions that are smaller than the recesses 90 or more in general of the cavities 9.

In some embodiments, opening 3 has an elongated shape and the width of the opening substantially coincides with that of the recesses 90 or more in general of the cavities 9.

It can also be provided that drum 8 may comprise or consist of a radially bladed rotary valve the blading of which defines the cavities 9, according to an alternative embodiment not shown in the figures.

The drum 8 is actuated in rotation around its own axis by means of a drag driven transmission 11 or, in an embodiment variation, by means of a hydraulic motor (not shown).

It will be appreciated that, in the context of this invention, a drag driven transmission refers to an operation system that receives a rotary movement from a drive wheel 15, schematically shown, which is rotated on the ground following the advancement of the seeder across the work area.

In other words, transmission 11 is configured to have the drive wheel 15 arranged, when in use, to be in contact with the work area, and proceeds under rotation following advancement on the ground of the seeder, or other agricultural machine, on which the distributor assembly 1 is mounted.

This operative choice proves to be particularly advantageous in the case that opening 3 and distributor 6 are arranged at the bottom of the hopper 2, as in this case the ground is easily reachable by means of opportune shafts.

In some embodiments, transmission 11 comprises, also for this purpose, an angular shaft 12 advantageously actuated by a preferably prismatic shaft 13. According to a preferred embodiment, shaft 13, in turn, is rotated by means of the wheel 15, by means of a transmission 14, for example a chain transmission, and preferably, with variable gearing. Said solution is therefore even more advantageous in the scope of the embodiment illustrated above.

It must be pointed out that, generally, transmission 11 that activates drum 8 preferably has variable gearing, thus allowing the required adjustment to distributor 6 by varying the rotation speed of the drum 8.

It is however possible that the drag driven transmission is operated by a drive shaft connected to the power take off shaft of the tractor or rather by other transmissions already known in the sector.

On the contrary, shutter 4 is actuated by means of an electric actuator 20 preferably of the linear type, preferably only intended to activate the shutter. Actuator 20 can be rack and pinion, including in one embodiment, a pinion 21 and a rack 22. Alternatively, the actuator 20 may be a worm screw or ball screw type.

However, it is not excluded that the actuator can be electro-hydraulic or electro-pneumatic.

The operation of the distributor assembly 1 is the following. During the operational advancement of the seeder upon which it is mounted, wheel 15 is rotated on the ground activating, by means of the kinematic chain 12, 13, 14, the rotation of drum 8 around the X axis. In terms of energy, it is pointed out that the operation of the drum 8 is the most burdensome of the whole distributor assembly 1, both because of the kinematic chain it is associated with, and primarily, because it is a continuous operation, maintained for the entire spreading phase of the granular material. If shutter 4 closes the output opening, no product is spread notwithstanding the drum rotation. Automatically or manually activating actuator 20 leads to a metered opening of the shutter 4 which partializes in a metered manner the usable dimensions of the output opening of the hopper. Contrary to that of the drum, this operation is generally discontinuous since, lacking any variation of the operating parameters of the seeder, the setting reached by shutter 4 is then maintained for at least some time. This entails an exceptionally contained electric energy use, due both to the reduced energy use of actuator 20, and because of its discontinuous operation.

The invention thereby solves the proposed problem while featuring numerous advantages among which that the alignment of the drum axis with the sliding direction of the shutter allows both for a direct partializing of the output opening, as well as a direct partializing of the axial extensions and therefore the capacity of the cavities. This increases synergically when the electrodes have an axial extension on the drum.

## Claims

1. Adjustable distributor assembly (1) for granular materials and the like comprising a hopper (2) with an output opening (3), a shutter (4) on said hopper (2) for partializing of said opening (3) and a volumetric distributor (6) attached to said hopper (2) at the opening (3) and motorised in order to supply, in a metered manner, granular materials from the hopper (2) via the opening (3), said volumetric distributor (6) being actuated by means of a drag driven transmission (11) or by means of a hydraulic motor, wherein the shutter (4) is guided in a sliding manner on the hopper (2) along a linear direction defining a sliding axis of said shutter (4), **characterized in that** said volumetric distributor (6) comprises a drum (8) which is rotated about an axis of rotation (X) substantially parallel to said sliding axis of said shutter (4).

2. Adjustable distributor assembly (1) according to claim 1, wherein said shutter (4) is actuated by means of an electric actuator (20).

3. Adjustable distributor assembly (1) according to any one of the preceding claims, wherein said volumetric distributor (6) is alveolated and comprises a plurality of cavities (9) for receiving the material supplied through said opening (3).

4. Adjustable distributor assembly according to any one of the preceding claims, wherein said cavities (9) are elongate.

5. Adjustable distributor assembly (1) according to claim 4, wherein the cavities (9) extend on said drum (8) so as to extend along a longitudinal direction which forms an angle of between 0° and 30° with the axis of rotation (X).

6. Adjustable distributor assembly (1) according to claim 5, wherein the longitudinal direction of extension of the cavities (9) is substantially parallel to the axis of rotation (X).

7. Adjustable distributor assembly (1) according to any one of the claims 3 to 6, wherein said drum (8) comprises or consists of a radially bladed rotary valve, the blading of which defines said cavities (9).

8. Adjustable distributor assembly (1) according to any one of the claims 3 to 7, wherein said cavities (9) form recesses (90) which face said opening (3) in such a way that the material coming out of said opening (3) itself falls within the same due to gravity.

9. Adjustable distributor assembly (1) according to any one of the claims from 3 to 8, wherein said opening (3) has an elongated shape and features a longitudinal dimension that is lesser than said cavities (9).

10. Adjustable distributor assembly (1) according to either one of claim 8 or 9, wherein said opening (3) features a longitudinal dimension that is lesser than said recesses (90).

11. Adjustable distributor assembly (1) according to either one of claim 9 or 10, wherein said opening (3) features a width which substantially coincides with that of said cavities (9).

12. Adjustable distributor assembly (1) according to any one of the preceding claims, when dependent on claim 2, wherein electric actuator (20) of said shutter (4) is a worm screw or a rack and pinion.

13. Adjustable distributor assembly (1) according to any one of the preceding claims, wherein said drag driven transmission (11) comprises a drive wheel (15), said transmission (11) being configured to have the drive wheel (15) arranged, when in use, to be in contact with the work area, and proceed under rotation following advancement of the distributor assembly (1) over the ground.

14. Adjustable distributor assembly (1) according to any one of the preceding claims, wherein said opening (3) and said shutter (4) are arranged at a lower portion of said hopper (2).

## Patentansprüche

1. Verstellbare Verteileranordnung (1) für körnige Materialien und dergleichen, die einen Trichter (2) mit einer Austrittsöffnung (3), einen Verschluss (4) am Trichter (2) zur Teilung der Öffnung (3) und einen Volumenverteiler (6) aufweist, der an der Öffnung (3) am Trichter (2) befestigt ist, und motorisiert ist, um körniges Material aus dem Trichter (2) über die Öffnung (3) dosiert zuzuführen, wobei der Volumenverteiler (6) mittels eines schleppgetriebenen Getriebes (11) oder mittels eines hydraulischen Motors betätigt wird, wobei der Verschluss (4) gleitend auf dem Trichter (2) entlang einer linearen Richtung geführt wird, die eine Gleitachse des Verschlusses (4) bildet, **dadurch gekennzeichnet, dass** der Volumenverteiler (6) eine Trommel (8) aufweist, die um eine Drehachse (X) gedreht wird, die im Wesentlichen parallel zur Gleitachse des Verschlusses (4) verläuft.

2. Verstellbare Verteileranordnung (1) nach Anspruch 1, wobei der Verschluss (4) mittels eines elektrischen Aktuators (20) betätigt wird.

3. Verstellbare Verteileranordnung (1) nach einem der vorhergehenden Ansprüche, wobei der Volumenverteiler (6) wabenförmig ist und eine Mehrzahl von Hohlräumen (9) zur Aufnahme des durch die Öffnung (3) zugeführten Materials aufweist.

4. Verstellbare Verteileranordnung nach einem der vorhergehenden Ansprüche, wobei die Hohlräume (9) länglich sind.

5. Verstellbare Verteileranordnung (1) nach Anspruch 4, wobei sich die Hohlräume (9) auf der Trommel (8) erstrecken, um sich entlang einer Längsrichtung zu erstrecken, die einen Winkel zwischen 0° und 30° mit der Drehachse (X) bildet.

6. Verstellbare Verteileranordnung (1) nach Anspruch 5, wobei die Längserstreckungsrichtung der Hohlräume (9) im Wesentlichen parallel zur Drehachse (X) verläuft.

7. Verstellbare Verteileranordnung (1) nach einem der Ansprüche 3 bis 6, wobei die Trommel (8) einen radial beschaufelten Drehschieber aufweist oder daraus besteht, dessen Beschaufelung die Hohlräume (9) bildet.

8. Verstellbare Verteileranordnung (1) nach einem der Ansprüche 3 bis 7, wobei die Hohlräume (9) Aussparungen (90) bilden, die der Öffnung (3) derart zugewandt sind, dass das Material, das aus der Öffnung (3) austritt, selbst unter denselben Einfluss der Schwerkraft fällt.

9. Verstellbare Verteileranordnung (1) nach einem der Ansprüche 3 bis 8, wobei die Öffnung (3) eine längliche Form aufweist und eine Längsabmessung aufweist, die geringer ist als die der Hohlräume (9).

10. Verstellbare Verteileranordnung (1) nach einem der Ansprüche 8 oder 9, wobei die Öffnung (3) eine Längsabmessung aufweist, die kleiner ist als die der Aussparungen (90).

11. Verstellbare Verteileranordnung (1) nach einem der Ansprüche 9 oder 10, wobei die Öffnung (3) eine Breite aufweist, die im Wesentlichen mit der Breite der Hohlräume (9) übereinstimmt.

12. Verstellbare Verteileranordnung (1) nach einem der vorhergehenden Ansprüche, wenn diese von Anspruch 2 abhängig sind, wobei der elektrische Aktuator (20) des Verschlusses (4) eine Schneckenschraube oder ein Zahnstangengetriebe ist.

13. Verstellbare Verteileranordnung (1) nach einem der vorhergehenden Ansprüche, wobei das schleppgetriebene Getriebe (11) ein Antriebsrad (15) aufweist, wobei das Getriebe (11) eingerichtet ist, dass das Antriebsrad (15) in Betrieb angeordnet ist, um mit dem Arbeitsbereich in Kontakt zu stehen, und sich unter Drehung fortzubewegen, nachdem die Verteileranordnung (1) über den Boden vorgeschoben wurde.

14. Verstellbare Verteileranordnung (1) nach einem der vorhergehenden Ansprüche, wobei die Öffnung (3) und der Verschluss (4) an einem unteren Abschnitt des Trichters (2) angeordnet sind.

## Revendications

1. Ensemble distributeur réglable (1) destiné à des matériaux granulaires et analogues, comprenant une trémie (2) dotée d'une ouverture de sortie (3), un obturateur (4) disposé sur ladite trémie (2) destiné à partialiser ladite ouverture (3) et un distributeur volumétrique (6) fixé à ladite trémie (2) au niveau de l'ouverture (3) et motorisé afin d'alimenter, de manière mesurée, des matériaux granulaires provenant de la trémie (2) par l'ouverture (3), ledit distributeur volumétrique (6) étant actionné au moyen d'une transmission entraînée par traînée (11) ou au moyen d'un moteur hydraulique, dans lequel l'obturateur (4) est guidé de manière coulissante sur la trémie (2) dans une direction linéaire définissant un axe de coulissement dudit obturateur (4), **caractérisé en ce que** ledit distributeur volumétrique (6) comprend un tambour (8) qui est entraîné en rotation autour d'un axe de rotation (X) sensiblement parallèle audit axe de coulissement dudit obturateur (4).

2. Ensemble distributeur réglable (1) selon la revendication 1, dans lequel ledit obturateur (4) est actionné au moyen d'un actionneur électrique (20).

3. Ensemble distributeur réglable (1) selon l'une ou l'autre des revendications précédentes, dans lequel ledit distributeur volumétrique (6) est alvéolé et comprend une pluralité de cavités (9) destinées à recevoir le matériau alimenté à travers ladite ouverture (3).

4. Ensemble distributeur réglable selon l'une quelconque des revendications précédentes, dans lequel lesdites cavités (9) sont allongées.

5. Ensemble distributeur réglable (1) selon la revendication 4, dans lequel les cavités (9) s'étendent sur ledit tambour (8) de façon à s'étendre dans une direction longitudinale qui forme un angle s'inscrivant entre 0° et 30° avec l'axe de rotation (X).

6. Ensemble distributeur réglable (1) selon la revendication 5, dans lequel la direction longitudinale d'étendue des cavités (9) est sensiblement parallèle à l'axe de rotation (X).

7. Ensemble distributeur réglable (1) selon l'une quelconque des revendications 3 à 6, dans lequel ledit tambour (8) comprend ou est constitué d'une vanne rotative à lames radiales, dont l'aubage définit lesdites cavités (9) .

8. Ensemble distributeur réglable (1) selon l'une quelconque des revendications 3 à 7, dans lequel lesdites cavités (9) forment des évidements (90) qui font face à ladite ouverture (3) de façon telle que le matériau arrivant de ladite ouverture (3) tombe lui-même à l'intérieur de ces derniers du fait de la gravité.

9. Ensemble distributeur réglable (1) selon l'une quelconque des revendications 3 à 8, dans lequel ladite ouverture (3) a une forme allongée et présente une dimension longitudinale qui est inférieure à celle desdites cavités (9).

10. Ensemble distributeur réglable (1) selon l'une ou l'autre de la revendication 8 et de la revendication 9, dans lequel ladite ouverture (3) présente une dimension longitudinale qui est inférieure à celle desdits évidements (90) .

11. Ensemble distributeur réglable (1) selon l'une ou l'autre de la revendication 9 et de la revendication 10, dans lequel ladite ouverture (3) présente une largeur qui coïncide sensiblement avec celle desdites cavités (9).

12. Ensemble distributeur réglable (1) selon l'une quelconque des revendications précédentes, lorsqu'elles dépendent de la revendication 2, dans lequel un actionneur électrique (20) dudit obturateur (4) est une vis sans fin ou une crémaillère et un pignon.

13. Ensemble distributeur réglable (1) selon l'une quelconque des revendications précédentes, dans lequel ladite transmission entraînée par traînée (11) comprend une roue d'entraînement (15), ladite transmission (11) étant configurée pour comporter la roue d'entraînement (15) disposée, en utilisation, de façon à se trouver en contact avec la zone de travail, et pour effectuer une rotation en suivant l'avancement de l'ensemble distributeur (1) sur le sol.

14. Ensemble distributeur réglable (1) selon l'une quelconque des revendications précédentes, dans lequel ladite ouverture (3) et ledit obturateur (4) sont disposés au niveau d'une partie inférieure de ladite trémie (2).
